# EUROPÄISCHE PATENTSCHRIFT

(11) **EP 2 381 757 B1**
(45) Veröffentlichungstag und Bekanntmachung des Hinweises auf die Patenterteilung: **17.06.2015**
(21) Anmeldenummer: 10700391.5
(22) Anmeldetag: 16.01.2010
(51) Int. Cl.: A01D 34/82

(54) **RASENSCHNEIDGERÄT**
LAWN MOWING MACHINE
APPAREIL À COUPER LE GAZON

(30) Priorität: 27.01.2009 DE 102009006277
(43) Veröffentlichungstag der Anmeldung: 02.11.2011
(73) Patentinhaber: HUSQVARNA AB, 561 82 Huskvarna (SE)
(72) Erfinder: RIEF, Joachim, 88422 Alleshausen (DE); BESSERER, Bernhard, 89264 Weissenhorn (DE)
(86) Internationale Anmeldenummer: PCT/EP2010/000223
(87) Internationale Veröffentlichungsnummer: WO 2010/086096

(56) Entgegenhaltungen:
- WO-A1-97/19584
- DE-A1- 2 930 712
- DE-A1- 4 100 611
- DE-A1-102005 035 024

## Beschreibung

Die Erfindung betrifft ein Rasenschneidgerät mit einem in einer Schneidebene um eine Rotationsachse rotierenden Schneidelement und einer Abdeckung.

Als Rasenschneidgeräte sind handgeführte Rasentrimmer mit einem um eine Rotationsachse rotierenden Schneidelement, welches typischerweise ein Schneidfaden ist, aber auch durch eine Schneidklinge gebildet sein kann, gebräuchlich. Es können auch mehrere um die Rotationsachse winkelversetzt zueinander angeordnete Schneidelemente vorgesehen sein. Das Schneidelement bewegt sich im Schneidbetrieb auf einer kreisringförmigen Schneidfläche im wesentlichen in einer Schneidebene, auf welcher die Rotationsachse senkrecht steht. Aus Sicherheitsgründen ist auf der dem Benutzer zuweisenden Seite der Schneidebene eine Abdeckung angebracht, welche axial von der Schneidebene um ein geringes Maß beabstandet ist und über einen Winkelbereich von wenigstens 135° den Schneidring radial überdeckt und sich mit einem Rand auch seitlich des Schneidringes erstreckt.

Ein dem Benutzer radial abgewandter Winkelbereich bildet den Schneidwinkelbereich. Die Abdeckung weist eine im wesentlichen radial verlaufende Einlaufkante auf, unter welcher das rotierende Schneidelement aus dem Schneidwinkelbereich unter die Abdeckung eintaucht und eine Auslaufkante, an welcher das Schneidelement unter der Abdeckung in den Schneidbereich austritt.

Für eine gute Schneidleistung ist ein Mindestwert der Umfangsgeschwindigkeit des Schneidelements erforderlich, was nachteiligerweise mit einer nicht unerheblichen Geräuschentwicklung verbunden ist. Maßnahmen, die Geräuschentwicklung durch besondere Schneidfadengeometrien zu verringern, haben sich als häufig nicht ausreichend erwiesen.

Zur Geräuschreduzierung von derartigen Rasentrimmern sind Motorsteuerungen bekannt, welche einen Leerlaufbetrieb des Geräts erkennen und in diesem die Drehzahl absenken und bei erneuter Arbeitsbelastung die Drehzahl wieder erhöhen, was aber mit erheblichem Aufwand verbunden ist.

Der vorliegenden Erfindung liegt die Aufgabe zugrunde, eine einfache und kostengünstige Maßnahme zur Reduzierung der Geräuschentwicklung eines Rasentrimmers anzugeben.

Die Erfindung ist im unabhängigen Anspruch beschrieben. Die abhängigen Ansprüche enthalten vorteilhafte Ausgestaltungen und Weiterbildungen der Erfindung.

Die Ausbildung von schallreduzierenden Strukturen an der Abdeckung in einem kantennahen Bereich der Abdeckung stellt eine besonders einfache und vorteilhafte Möglichkeit dar den Lärmpegel des Rasentrimmers zu vermindern. Insbesondere zeigt sich bei schallreduzierenden Strukturen, welche Flächendurchbrüche durch die Abdeckung aufweisend, überraschend eine deutliche Lärmreduzierung. Solche Flächendurchbrüche sind insbesondere bei als Kunststoff-Spritzgussteilen ausgeführten Abdeckungen auf besonders günstige Weise erzeugbar. Schallreduzierende Strukturen, insbesondere Flächendurchbrüche in dem kantennahen Bereich liegen vorteilhafterweise in bezüglich der Rotationsachse radialer Richtung über einen Bereich der Ringsegmentfläche der Abdeckung vor, dessen radiale Erstreckung wenigstens 50 %, insbesondere wenigstens 75 % der radialen Erstreckung des von dem Schneidelement durchlaufenen Schneidrings beträgt.

Die Flächendurchbrüche weisen von der Unterseite der Schutzabdeckung zu deren Oberseite eine Durchbruchsrichtung auf, welche vorteilhafterweise gegen die Schneidebene geneigt verläuft, insbesondere von unten nach oben in Richtung der Rotationsachse geneigt. Durch die Neigung der Durchbruchsrichtung gegen die Schneidebene kann vorteilhafterweise weitgehend vermieden werden, dass durch die Durchbrüche Partikel von der Unterseite der Schutzabdeckung in Richtung des Benutzers geschleudert werden. Vorzugsweise sind die Durchbrüche in zur Rotationsachse paralleler Projektion vollständig verdeckt. Die Begrenzung der Durchbrüche kann vorteilhafterweise über eine obere Fläche der Schutzabdeckung hinaus ragen, um die Verdeckung in axialer Projektion zu erreichen.

Die schallreduzierenden Strukturen erstrecken sich vorteilhafterweise über einen Bereich von wenigstens 10° um die Rotationsachse. Der Beginn der schallreduzierenden Strukturen in Drehrichtung des Schneidelements ist vorteilhafterweise um maximal 5° gegen die Einlaufkante in Drehrichtung des Schneidelements versetzt.

Die Erfindung ist nachfolgend anhand bevorzugter Ausführungsbeispiele unter Bezugnahme auf die Abbildungen noch eingehend erläutert. Dabei zeigt:
- Fig. 1: eine Schrägansicht eines Rasentrimmers,
- Fig. 2: einen vergrößerten Ausschnitt der Schutzabdeckung,
- Fig. 3: eine Darstellung in axialer Ansicht,
- Fig. 4: einen Axialebenenschnitt durch Schlitzstrukturen.

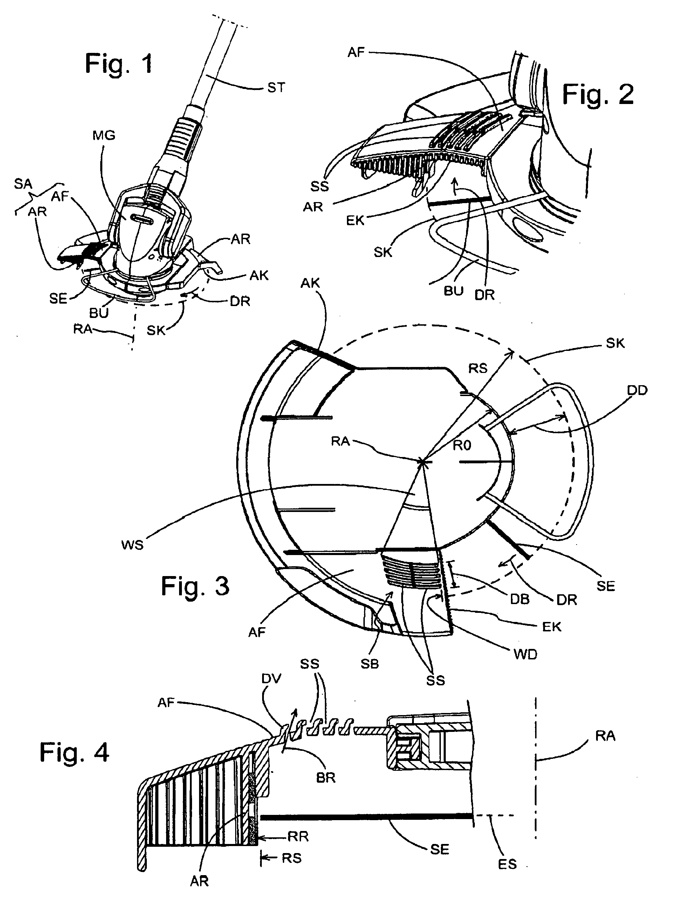

Fig. 1 zeigt in Schrägansicht einen Rasentrimmer, bei welchem am unteren Ende einer Stielanordnung ST ein Motorgehäuse MG angeordnet ist. Ein in dem Motorgehäuse MG untergebrachter Motor treibt einen Fadenschneidkopf mit einem durch Zentrifugalkraft gespannten und im wesentlichen radial verlaufenden Faden SE als Schneidelement. Der Faden läuft im wesentlichen in einer Schneidebene um und durchläuft einen Schneidkreisring in dieser Schneidebene, auf welcher die Rotationsachse RA des Schneidkopfes senkrecht steht. Der Schneidkreisring SK des Schneidelements ist teilweise durch eine Abdeckfläche AF einer Schutzabdeckung SA überdeckt. Die Schutzabdeckung SA erstreckt sich mit einem in axialer Richtung fortgesetzten Rand AR seitlich des Schneidkreises SK entlang der Abdeckfläche AF. Die Schutzabdeckung SA ist bezüglich der Rotationsachse RA auf der dem Benutzer zugewandten Seite und soll den Benutzer vor durch das Schneidelement hoch geschleuderten Partikeln schützen. Das Schneidelement SE läuft in einem vorgegebenen Drehsinn um die Rotationsachse RA um, was durch den Pfeil DR angedeutet ist. Der nicht durch die Schutzabdeckung überdeckte Teil des Schneidkreisrings sei als Schneidbereich bezeichnet. Der Schneidbereich ist teilweise in an sich bekannter Weise durch einen Pflanzenschutzbügel BU überdeckt.

Rasenschneidgeräte solcher Art sind in verschiedener Ausführung bekannt. Insbesondere kann das Schneidelement auch als eine Schneidklinge ausgeführt sein und es können auch mehrere um die Rotationsachse gegeneinander winkelversetzt angeordnete Schneidelemente vorgesehen sein. Ein Motor kann auch am oberen Ende des Stiels angeordnet sein und über eine Antriebswelle mit dem am unteren Ende des Stiels angeordneten Schneidwerkzeug verbunden sein. Zum Trimmen von Rasenkanten kann die Rotationsachse horizontal und die Schneidebene vertikal ausgerichtet werden.

Fig. 2 zeigt einen vergrößerten Ausschnitt der Schutzabdeckung im Bereich von der der Drehrichtung des Schneidelements entgegen gerichteten Kante der Abdeckfläche AF, bei welcher das Schneidelement bei seiner Drehung unter die Abdeckfläche AF eintaucht und die als Einlaufkante EK oder einlaufende Kante bezeichnet sei. Die in Drehrichtung DR weisende Kante AK der Abdeckfläche, bei welcher das Schneidelement wieder in den Schneidbereich gelangt, sei als Auslaufkante AK bezeichnet. In Drehrichtung des Schneidelements in geringem Abstand nach der Einlaufkante der Abdeckfläche AF sind mehrere Durchbrüche in Form von Schlitzen SS vorgesehen, welche Luftströmungskanäle zwischen der Unterseite der Abdeckfläche AF und deren Oberseite bilden. Es zeigt sich überraschend, dass trotz der dadurch gegebenen Möglichkeit der Luftschallausbreitung durch diese Kanäle das Arbeitsgeräusch des Trimmers merklich gesenkt werden kann. Die Durchbrüche in der Abdeckfläche sind vorzugsweise als im wesentlichen kreissegmentförmig um die Rotationsachse verlaufende Schlitze ausgeführt, wobei mehrere solcher Schlitze radial voneinander beabstandet aufeinander folgen. Im skizzierten Beispiel sind auch in Umfangsrichtung Schlitze beabstandet aufeinander folgend angeordnet, wobei durch Zwischenstege der Abdeckfläche zwischen in Umfangsrichtung aufeinander folgenden Schlitzen die Stabilität der Abdeckfläche in diesem Bereich erhöht wird.

Fig. 3 zeigt schematisch eine Draufsicht auf die Abdeckung und den Schneidkreis. Der Außenradius des Schneidkreisrings sei mit RS, der Innenradius im Schneidbereich mit R0 und die radiale Erstreckung des Schneidkreisrings im Schneidbereich mit DD bezeichnet. Der Rand AR der Abdeckung, welcher sich auch senkrecht zur Fig. 3 der Schneidebene seitlich des Schneidkreisrings erstreckt, ist mit einem Radius RR (Fig. 4) um die Rotationsachse RA um ein geringes Maß größer als der Außenradius RS des Schneidkreises. Die Gruppe der als Schlitze SS ausgebildeten Durchbrüche durch die Abdeckung liege in einem Flächenbereich SB, welcher in radialer Richtung eine mit DB bezeichnete Erstreckung aufweist und in Umfangsrichtung einen Winkel WS beansprucht. Die radiale Erstreckung DB beträgt vorteilhafterweise wenigstens 50 % der mit RS bezeichneten radialen Erstreckung des Schneidkreisrings im Schneidbereich. Der Flächenbereich SB ist in Umfangsrichtung um einen Winkel WD gegen die Einlaufkante EK in Drehrichtung des Schneidelements SE versetzt, wobei der Winkel WD vorteilhafterweise höchstens 5°, vorzugsweise höchstens 2° beträgt. Der Winkel WS, welchen der Flächenbereich SB einnimmt, beträgt vorteilhafterweise wenigstens 10° um die Rotationsachse. Die Erstreckung des kantennahen Flächenbereichs SB in Umfangsrichtung beträgt vorteilhafterweise wenigstens 30 %, insbesondere wenigstens 50 % der radialen Erstreckung DD des Schneidkreisrings.

Der schallreduzierende Effekt zeigt sich besonders ausgeprägt bei Durchbrüchen nahe der Einlaufkante EK. Vorteilhafterweise ist daher der Winkel WS nicht größer als 45°, insbesondere nicht größer als 30°. Die Erstreckung des kantennahen Flächenbereichs in Umfangsrichtung beträgt vorteilhafterweise höchstens 250 %, insbesondere höchstens 150 % der radialen Erstreckung DD des Schneidkreisrings.

Fig. 4 zeigt eine besonders vorteilhafte Ausführung der Flächendurchbrüche SS in der Abdeckfläche AF. Die Blickrichtung der Darstellung nach Fig. 4 ist in Bewegungsrichtung des Schneidelements SE gerichtet, welches sich daher senkrecht zur Zeichenebene der Fig. 4 in diese hinein bewegt. Die Schneidebene des Schneidelements SE ist mit ES bezeichnet.

Die Durchbrüche SS durch die Abdeckfläche AF bilden Strömungskanäle zwischen der Unterseite und der Oberseite der Abdeckfläche AF, deren mittlere Richtung als Durchbruchsrichtung BR bezeichnet sei. Diese Durchbruchsrichtung verläuft schräg gegen die Rotationsachse RA und von der Unterseite zur Oberseite der Abdeckfläche AF in Richtung der Rotationsachse geneigt. An der Oberseite der Abdeckfläche AF sind vorteilhafterweise über eine durch die Umgebung der Durchbrüche gebildete, annähernd ebene Fläche hinausragend Vorsprünge DV ausgebildet, welche in Durchbruchsrichtung BR über die Durchbrüche SS ragen, so dass in zur Rotationsachse paralleler axialer Projektion die Durchbrüche im wesentlichen verdeckt erscheinen. Hierdurch wird vermieden, dass durch das rotierende Schneidelement Partikel durch die Durchbrüche SS nach oben und/oder schräg radial nach außen geschleudert werden können. Die Überdeckung in axialer Projektion kann auch durch Strukturen an der Unterseite der Abdeckfläche erreicht werden.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in Rahmen der Ansprüche in mancherlei Weise abwandelbar.

## Patentansprüche

1. Rasenschneidgerät mit wenigstens einem Schneidelement (SE), welches in einer Schneidebene (ES) um eine Rotationsachse (RA) in einer Bewegungsdrehrichtung (DR) rotiert und einen Schneidkreisring überstreicht, und mit einer Schutzabdeckung (SA), welche axial von der Schneidebene beabstandet oberhalb von dieser angeordnet ist und mit einer im wesentlichen ebenen Ringsegmentfläche den Schneidring überdeckt und einen Schneidbereich des Schneidringes unbedeckt lässt und mit einer Einlaufkante (EK) dem Schneidbereich entgegen der Bewegungsdrehrichtung des Schneidelements zuweist, **dadurch gekennzeichnet, dass** in Bewegungsrichtung nach der Einlaufkante in einem kantennahen Bereich (SB) der Ringsegmentfläche schallreduzierende Strukturen an der Schutzabdeckung ausgebildet sind.

2. Rasenschneidgerät nach Anspruch 1, **dadurch gekennzeichnet, dass** die schallreduzierenden Strukturen einen oder vorzugsweise mehrere Flächendurchbrüche (SS) durch die Ringsegmentfläche (AF) zwischen deren Oberseite und der Schneidebene (ES) enthalten.

3. Rasenschneidgerät nach Anspruch 2, **dadurch gekennzeichnet, dass** die Flächendurchbrüche in axialer Projektion zumindest teilweise, vorzugsweise vollständig innerhalb des Schneidkreisrings liegen.

4. Rasenschneidgerät nach Anspruch 2 oder 3, **dadurch gekennzeichnet, dass** die Durchtrittsrichtungen (BR) der Flächendurchbrüche (SS) von der Unterseite zur Oberseite der Schutzabdeckung gegen die Schneidebene (ES) geneigt ausgerichtet sind.

5. Rasenschneidgerät nach einem der Ansprüche 2 bis 4, **gekennzeichnet durch** schlitzförmige Flächendurchbrüche (SS).

6. Rasenschneidgerät nach Anspruch 5, **dadurch gekennzeichnet, dass** die Längsrichtung der schlitzförmigen Flächendurchbrüche quer zur Radialrichtung bezüglich der Rotationsachse des Schneidelements verlaufen.

7. Rasenschneidgerät nach einem der Ansprüche 1 bis 6, **dadurch gekennzeichnet, dass** die schallreduzierenden Strukturen sich über wenigstens 50 % der radialen Ausdehnung (DD) der Ringsegmentfläche erstrecken.

8. Rasenschneidgerät nach einem der Ansprüche 1 bis 7, **dadurch gekennzeichnet, dass** der kantenahe Bereich (SB) in Umfangsrichtung einen Winkel (WS) von wenigstens 10° einnimmt.

9. Rasenschneidgerät nach einem der Ansprüche 1 bis 7, **dadurch gekennzeichnet, dass** die Erstreckung des kantennahen Bereichs in Umfangsrichtung wenigstens 30 %, insbesondere wenigstens 50 % der radialen Erstreckung (DD) des Schneidkreisrings beträgt.

10. Rasenschneidgerät nach einem der Ansprüche 1 bis 9, **dadurch gekennzeichnet, dass** der kantennahe Bereich in Umfangsrichtung höchstens 45° einnimmt.

11. Rasenschneidgerät nach einem der Ansprüche 1 bis 9, **dadurch gekennzeichnet, dass** die Erstreckung des kantennahen Bereichs in Umfangsrichtung höchstens 250 %, insbesondere höchstens 150 % der radialen Erstreckung (DD) des Schneidrings beträgt.

12. Rasenschneidgerät nach einem der Ansprüche 1 bis 11, **dadurch gekennzeichnet, dass** das Schneidelement fadenförmig ist.

13. Rasenschneidgerät nach einem der Ansprüche 1 bis 12, **dadurch gekennzeichnet, dass** die Einlaufkante (EK) in axialer Projektion im wesentlichen bezüglich der Rotationsachse (RA) radial verläuft.

## Claims

1. Lawn trimmer with at least one cutting element (SE), that rotates in a cutting plane (ES) about an axis of rotation (RA) in a direction of movement (DR) and extends over a cutting torus, and with a protective cover (SA), that is arranged distanced above this and with an essentially plane annular segment surface that covers the cutting ring and leaves a cutting region of the cutting ring uncovered and allocates with an intake edge (EK) the cutting region against the direction of movement of the cutting element, **characterised in that** in the direction of movement according to the intake edge in a region close the edge (SB) of the annular segment surface, noise-reducing structures are formed on the protective cover.

2. Lawn trimmer according to claim 1, **characterised in that** the noise-reducing structures contain one or preferably several surface breakthroughs (SS) through the annular segment surface (AF) between its upper edge and the cutting plane (ES).

3. Lawn trimmer according to claim 2, **characterised in that** the surface breakthroughs in axial projection are located at least partially, preferably entirely, inside the cutting torus.

4. Lawn trimmer according to claim 2 or 3, **characterised in that** the directions of passage (BR) of the surface breakthroughs (SS) are aligned inclined from the underside to the top of the protective cover against the cutting plane (ES).

5. Lawn trimmer according to any one of claims 2 to 4, **characterised by** slot-shaped surface breakthroughs (SS).

6. Lawn trimmer according to claim 5, **characterised in that** the longitudinal direction of the slot-shaped surface breakthroughs run transverse to the radial direction in relation to the axis of rotation of the cutting element.

7. Lawn trimmer according to any one of claims 1 to 6, **characterised in that** the sound-reducing structures extend over at least 50% of the radial expansion (DD) of the annular segment surface.

8. Lawn trimmer according to any one of claims 1 to 7, **characterised in that** the region close to the edge (SB) assumes an angle (WS) in the circumferential direction of at least 10°.

9. Lawn trimmer according to any one of claims 1 to 7, **characterised in that** the extension of the area close to the edge in the circumferential direction is at least 30%, in particular at least 50% of the radial extension (DD) of the cutting torus.

10. Lawn trimmer according to any one of claims 1 to 9, **characterised in that** the region close to the end assumes a maximum of 45° in the circumferential direction.

11. Lawn trimmer according to any one of claims 1 to 9, **characterised in that** the extension of the region close to the edge in the circumferential direction is at most 250%, in particular at most 150% of the radial extension (DD) of the cutting ring.

12. Lawn trimmer according to any one of claims 1 to 11, **characterised in that** the cutting element is threadlike.

13. Lawn trimmer according to any one of claims 1 to 12, **characterised in that** the intake edge (EK) runs radially in axial projection essentially in relation to the axis of rotation (RA).

## Revendications

1. Tondeuse avec au moins un élément de découpe (SE) qui tourne dans un plan de découpe (ES) autour d'un axe de rotation (RA) dans une direction de rotation (DR) et qui recouvre un cercle de découpe, et avec un couvercle de protection (SA) qui est disposé à distance en direction axiale du plan de découpe au-dessus de celui-ci, et qui recouvre le cercle de découpe avec une surface du segment de découpe essentiellement horizontale, dénude un domaine de découpe du cercle de découpe et l'attribue au domaine de découpe avec un bord d'admission (EK) par rapport à la direction de rotation de l'élément de découpe, **caractérisée en ce qu'**il y a des structures anti-bruit sur le couvercle de protection dans la direction de déplacement après le bord d'admission dans un domaine proche du bord (SB) de la surface du segment de découpe.

2. Tondeuse selon la revendication 1, **caractérisée en ce que** les structures anti-bruit contiennent une ou préférentiellement plusieurs percées (SS) à travers la surface du segment de découpe (AF), entre sa surface supérieure et le plan de découpe (ES).

3. Tondeuse selon la revendication 2, **caractérisée en ce qu'**en projection axiale, les percées sont situées au moins en partie, préférentiellement entièrement à l'intérieur du cercle de découpe.

4. Tondeuse selon la revendication 2 ou 3, **caractérisée en ce que** les directions de traversée (BR) des percées (SS) sont inclinées de la surface inférieure à la surface supérieure du couvercle de protection par rapport au plan de découpe (ES).

5. Tondeuse selon l'une des revendications 2 à 4, **caractérisée par** des percées (SS) en forme de fentes.

6. Tondeuse selon la revendication 5, **caractérisée en ce que** le sens de la longueur des percées en forme de fentes est transversal par rapport à la direction radiale relativement à l'axe de rotation de l'élément de découpe.

7. Tondeuse selon l'une des revendications 1 à 6, **caractérisée en ce que** les structures anti-bruit s'étendent sur au moins 50% de la surface radiale (DD) de la surface du segment de découpe.

8. Tondeuse selon l'une des revendications 1 à 7, **caractérisée en ce que** le domaine proche du bord (SB) occupe un angle (WS) d'au moins 10° dans le sens périphérique.

9. Tondeuse selon l'une des revendications 1 à 7, **caractérisée en ce que** l'étendue du domaine proche du bord dans le sens périphérique est d'au moins 30%, en particulier d'au moins 50% de l'étendue radiale (DD) du cercle de découpe.

10. Tondeuse selon l'une des revendications 1 à 9, **caractérisée en ce que** le domaine proche du bord occupe un angle maximum de 45°dans le sens périphérique.

11. Tondeuse selon l'une des revendications 1 à 9, **caractérisée en ce que** l'étendue du domaine proche du bord est maximum 250%, en particulier maximum 150% de l'étendue radiale (DD) du cercle de découpe.

12. Tondeuse selon l'une des revendications 1 à 11, **caractérisée en ce que** l'élément de découpe est filiforme.

13. Tondeuse selon l'une des revendications 1 à 12, **caractérisée en ce qu'**en projection axiale, le bord d'admission (EK) s'étend essentiellement en direction radiale par rapport à l'axe de rotation (RA).
